# EUROPEAN PATENT SPECIFICATION

(11) **EP 1 876 813 B1**
(45) Date of publication and mention of the grant of the patent: **29.11.2017**
(21) Application number: 07013140.4
(22) Date of filing: 04.07.2007
(51) Int. Cl.: B60R 1/00, H04N 7/18

(54) **Vehicle comprising an image display system and image display method**
Fahrzeug mit einem Bildanzeigesystem und Bildanzeigeverfahren
Véhicule comprenant un système d'affichage d'images et procédé d'affichage d'images

(30) Priority: 06.07.2006 JP 2006186719; 15.06.2007 JP 2007158647
(43) Date of publication of application: 09.01.2008
(73) Proprietor: Nissan Motor Co., Ltd., Yokohama-shi, Kanagawa 221-0023 (JP)
(72) Inventor: Kanaoka, Akihiro c/o Nissan Motor Co., Ltd., Atsugi-shi Kanagawa 243-0192 (JP); Kimura, Makoto c/o Nissan Motor Co., Ltd., Atsugi-shi Kanagawa 243-0192 (JP); Sakai, Kazuhiko c/o Nissan Motor Co., Ltd., Atsugi-shi Kanagawa 243-0192 (JP); Sugawara, Daisuke c/o Nissan Motor Co., Ltd., Atsugi-shi Kanagawa 243-0192 (JP)
(74) Representative: Grünecker Patent- und Rechtsanwälte PartG mbB

(56) References cited:
- EP-A2- 1 129 904
- EP-A2- 1 650 080
- JP-A- 2003 067 735
- JP-A- 2003 169 323
- US-B1- 6 476 855
- US-B1- 6 760 063

## Description

The present invention relates to a vehicle comprising an image display system and an image display method for displaying an image around a vehicle. A technology has conventionally been in widespread use, which joins a plurality of images photographed by a plurality of on-vehicle cameras to form a composite image, and displays the composite image in a display device in a car room to assist driver's field of vision, thereby enhancing safety of vehicle driving. In many cases, the composite image formed by joining the plurality of images does not accurately reflect an actual landscape because of a loss of continuity of images at the joints. Under these circumstances, as disclosed in Japanese Patent Application Laid-Open No. 2003-67735, inaccuracy of images at the joints is indicated by masking the joints of the images, thereby giving a warning to occupants of the vehicle.

In another example, EP 1 129 904 A2 discloses an apparatus for watching around a vehicle comprises an image pick-up unit mounted on the exterior of a vehicle and a display unit provided within the vehicle and used for displaying left and right images of the surrounding of the vehicle thus picked up by the image pick-up unit together with a mask image for dividing the surrounding image into the left and right images. In this case, two kinds of display colors including black and blue may be provided to the mask image. Further, a photodiode for detecting lightness outside the vehicle is provided. In a case where the luminous intensity outside the vehicle is decided to be high by a luminous intensity signal detected by the photodiode, a dark mask image is displayed on the display unit, whereas when the luminous intensity outside the vehicle is decided to be low thereby, a light blew mask image is displayed thereon.

JP 2003 169323 A discloses a vehicle periphery-monitoring apparatus that allows a driver to easily and accurately recognize obstacles that are present in an imaging region that becomes the dead angle of an output image. When obstacles are present at a portion that becomes a dead angle in an output image, an ultrasonic sensor detects the obstacles, and a signal-processing section gives an instruction to an alarm sound-generating apparatus to transmit an alarm by receiving signals from the ultrasonic sensor, and at the same time gives an instruction to an image-superposing section to blink a joint eye mask pattern.

JP 2003 067735 A discloses a seam processing method capable of eliminating easily strange feeling in a seam between composed images. In this method for processing the seam between the composed images of the present invention, an image pattern extended along the seam is superposed to eliminate the strange feeling in the seam between an image image-picked up using one camera mounted on a vehicle and an image image-picked up using the other camera mounted on the vehicle.

EP 1 650 080 A2 discloses a driving support system which includes: at least two cameras to take images of areas around a vehicle, whose ranges of field of view partially overlap with each other; a control unit performing a predetermined coordinate transformation on the images taken by the cameras and joining the transformed images together to produce an overhead view image; and a display unit to display the overhead view image. The control unit changes the position of the joint of the transformed images in the overhead view image.

US 6,476,855 B1 discloses a trimming video image including a mask region having vehicle side window shapes and a vehicle image which are formed by an image forming device are overlapped on pickup video images of a CCD camera obtained by picking up the left and right forward images of a vehicle to form a synthesized image, and the synthesized image is displayed on a display device.

US 6,760,063 B1 discloses a plurality of cameras arranged in juxtaposition such that the image-sensible range between the cameras partially overlap each other. A frame indicative of a combined image-sensible range which includes an image-sensible range of each of the plurality of cameras is displayed on a monitor screen, and a frame indicative of an image-sensing range of a selected camera is displayed in the frame with a position and size corresponding to the direction and magnification of the image sensing.

### SUMMARY OF THE INVENTION

According to the conventional technology, however, masks have always been superposed on the joints of the composite image in a certain display form. Thus, for example, when the occupants of the vehicle get used to this display, the masks lose visibility, creating a possibility of a reduction in effectiveness of warning.

The present invention has been developed to solve the aforementioned problem of the conventional technology, and it is an object of the invention to provide a vehicle image display system for a vehicle and an image display method for displaying an image in a vehicle which can display a composite image to be easily seen while preventing a reduction in effectiveness of mask warning.

The object is solved with regard to the vehicle according to the invention by a vehicle comprising the features of claim 1. The object is solved with regard to the image display method according to the invention by an image display method for displaying an image around a vehicle comprising the features of claim 7.

Advantageous embodiments can be derived from the subclaims.

The vehicle image display system and the image display method solves the problem by highlighting masks of a composite image over a passage of predetermined time after predetermined conditions are established when a plurality of images photographed by a plurality of on-vehicle cameras are jointed to form a composite image, and masks are superposed on the composite image to cover joints of the plurality of images, and displayed.

### BRIEF DESCRIPTION OF THE DRAWINGS

Fig. 1 is a block diagram showing a configuration of a vehicle image display system according to the present invention.
Fig. 2 is a diagram showing a specific example of installing positions and photographing areas of four on-vehicle cameras.
Fig. 3 is a diagram showing a top view image formed by changing viewpoints and joining images photographed by the four on-vehicle cameras installed around a vehicle.
Figs. 4A to 4C are diagrams showing a viewpoint changing process executed by an image synthesis unit of an image processing device: Fig. 4A showing a relation of positions and photographing areas between a real camera and a virtual camera, Fig. 4B showing an image of a photographing area photographed by the real camera (image before viewpoint changing), and Fig. 4C showing an image of a photographing area photographed by the virtual camera (image after viewpoint changing).
Fig. 5 is a diagram showing a situation in which masks are superposed to cover image joints of the top view image.
Fig. 6 is a diagram showing an example of a screen configuration of an image displayed in a display.
Fig. 7 is a flowchart showing a specific example of a process regarding mask display control executed by the image processing device after an ignition switch of the vehicle is turned ON in the vehicle image display system of the embodiment.

### DETAILED DESCRIPTION OF THE PREFERRED EMBODIMENTS

A specific example of an image display system for a vehicle capable of displaying a composite image looking down at all the surroundings of a vehicle from a virtual viewpoint above the vehicle according to an embodiment of the present invention will be described below. The image display system for a vehicle of the invention includes a function of photographing images of four directions around the vehicle by four on-vehicle cameras of the vehicle, and displaying a plurality of images as images to be monitored in a display of a car room while switching the images according to an operation of a vehicle occupant.The image display system for a vehicle includes a function of changing viewpoints of original images photographed by the on-vehicle cameras into overview images and joining the images to form a composite image looking down at all the surroundings of the vehicle from a virtual viewpoint above the vehicle, and combining the composite image with one of the original images photographed by the on-vehicle cameras and before viewpoint changing to be displayed as an image to be monitored in the display of the car room.

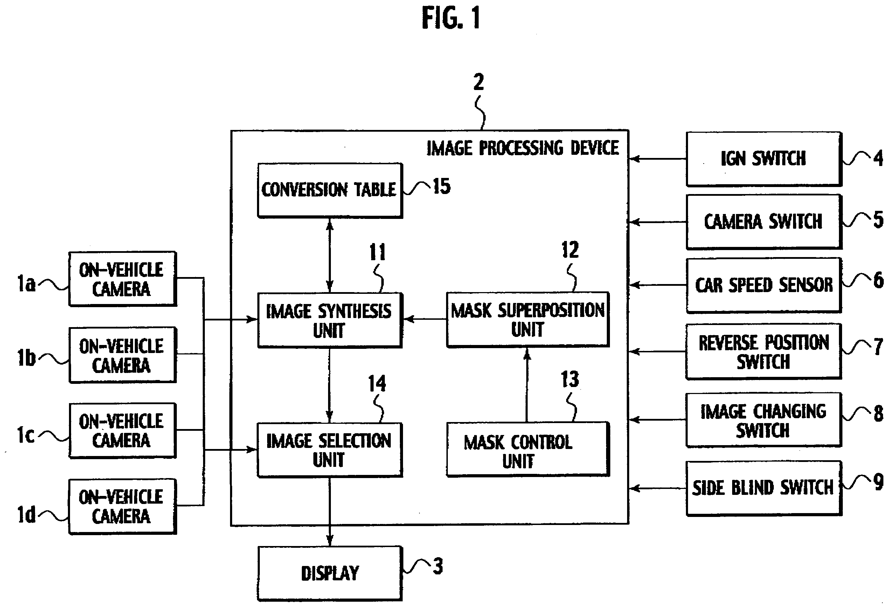

Fig. 1 shows a configuration of the image display system for a vehicle of the invention. This vehicle image display system includes four on-vehicle cameras 1a to 1d, an image processing device 2, and a display 3 in a car room as main components. An ignition switch 4, a camera switch 5, a car speed sensor 6, a reverse position switch 7, an image changing switch 8, and a side blind switch 9 are connected to the image processing device 2.

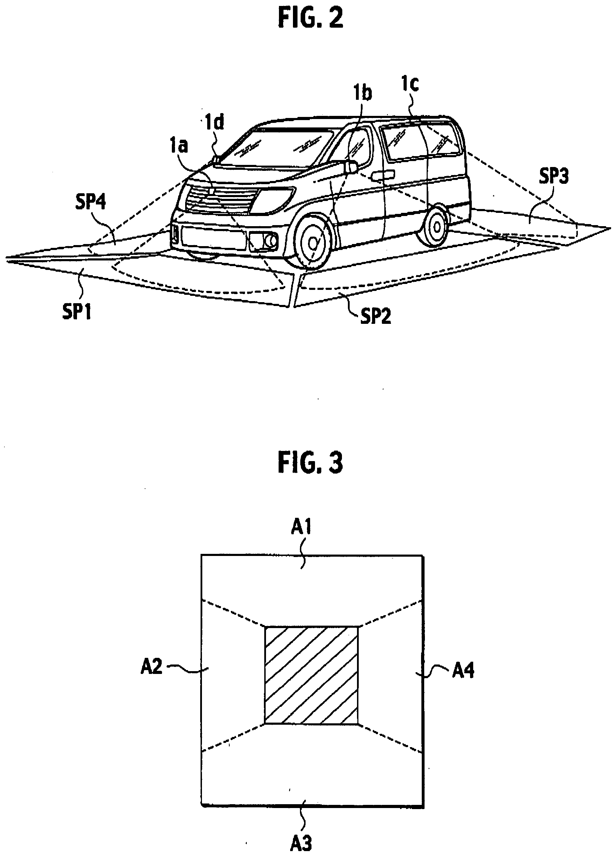

The on-vehicle cameras 1a to 1d are installed in the front, rear, left and right sides of the vehicle to photograph images of four directions around the vehicle. For example, as shown in Fig. 2, the on-vehicle camera 1a is installed in a predetermined position of the front side of the vehicle such as a position near a front grille to photograph an image (front view image hereinafter) of a predetermined photographing area SP1 of the front side of the vehicle. The on-vehicle camera 1b is installed in a predetermined position of the left side of the vehicle such as a left side mirror to photograph an image (left side view image) of a predetermined photographing area SP2 of the left side of the vehicle. The on-vehicle camera 1c is installed in a predetermined area of the rear side of the vehicle such as a roof spoiler to photograph an image (rear view image) of a predetermined photographing area SP3 of the rear side of the vehicle. The on-vehicle camera 1d is installed in a predetermined position of the right side of the vehicle such as a right side mirror to photograph an image (right side view image) of a predetermined photographing area SP4 of the right side of the vehicle. Data of the images photographed by the four on-vehicle cameras 1a to 1d are fed to the image processing device 2 as needed.

The image processing device 2 includes an image synthesis unit 11 for forming a composite image (top view image hereinafter) looking down at all the surroundings of the vehicle from a virtual viewpoint above the vehicle, a mask superposition unit 12 for superposing a mask on the top view image formed by the image synthesis unit 11, a mask control unit 13 for controlling a display form of the mask superposed by the mask superposition unit 12, and an image selection unit 14 for selecting an image to be displayed as an image to be monitored in the display 3.

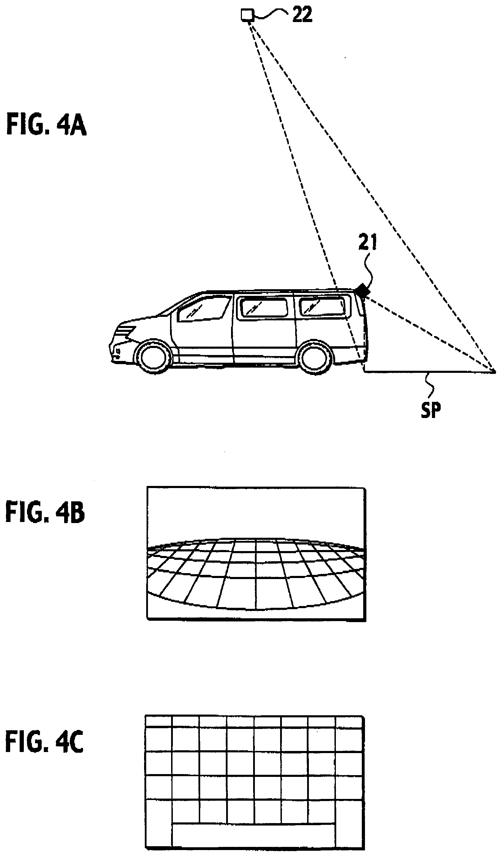

The image synthesis unit 11 viewpoint-changes the front view image, the left side view image, the rear view image, and the right side view image photographed by the on-vehicle cameras 1a to 1d into overview images by using a conversion table 15 describing a correspondence of image addresses between images before and after conversion, and joins these images to form a top view image similar to that shown in Fig. 3. The viewpoint changing process of the image synthesis unit 11 means a process of converting an image similar to that shown in Fig. 4B which is obtained by, for example, photographing a predetermined photographing area SP with an installing position of a real camera 21 of Fig. 4A set as a viewpoint into an overview image (image looking down at a photographing area directly above the vehicle center) similar to that shown in Fig. 4C when a predetermined photographing area SP is photographed by using a virtual camera 22 of Fig. 4A as a viewpoint. A relation between the images before and after conversion is uniquely decided based on lens characteristics of the on-vehicle camera and a mounting angle. Thus, the viewpoint changing process of the image synthesis unit 11 can be realized only by coordinate conversion of an image memory using the conversion table 15. The image synthesis unit 11 carries out the viewpoint changing process for the front view image, the left side view image, the rear view image, and the right side view image photographed by the on-vehicle cameras 1a to 1d, cuts out necessary parts of obtained overview images and joins the images to form a top view image similar to that shown in Fig. 3.

In an image example of Fig. 3, an image area A1 is a cutout of a part of the overview image obtained by subjecting the front view image photographed by the on-vehicle camera 1a to viewpoint changing, an image area A2 is a cutout of a part of the overview image obtained by subjecting the left side view image photographed by the on-vehicle camera 1b to viewpoint changing, an image area A3 is a cutout of a part of the overview image obtained by subjecting the rear view image photographed by subjecting the rear view image photographed by the on-vehicle camera 1c to viewpoint changing, and an image area A4 is a cutout of a part of the overview image obtained by subjecting the right side view image photographed by the on-vehicle camera Id to viewpoint changing. In the image example of Fig. 3, a shaded area of the image center indicates a position of the vehicle.

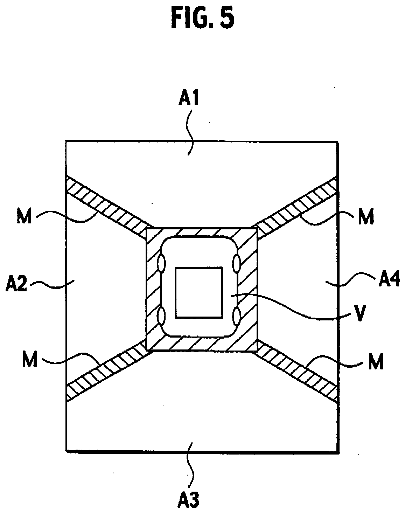

The mask superposition unit 12 superposes masks M on the top view image to cover joints of the adjacent image areas A1 to A4 of the top view image formed by the image synthesis unit 11 under control of the mask control unit 13. The top view image formed by the image synthesis unit 11 is an image formed by joining the overview images by the viewpoint changing process as described above. Thus, image distortion caused by an influence of the viewpoint changing concentrates on the joints of the image areas A1 to A4 which are joints of the overview images, causing a loss of image continuity. Especially, when a solid object of a road appears in the joints of the image areas A1 to A4 of the top view image, recognition of the solid object is difficult because of image discontinuity. Accordingly, for example, as shown in Fig. 5, the mask superposition unit 12 superposes masks M on the joints of the adjacent image areas A1 to A4 of the top view image formed by the image synthesis unit 11, thereby enabling an occupant of the vehicle to recognize presence of joints which causes a lack of accuracy of the image. In the image example of Fig. 5, the vehicle V of the image center is a computer graphics (CG) image superposed on the top view image to enable the vehicle occupant to understand a position of the vehicle.

As described above, the masks M are superposed on the top view image to cover the joints, and inaccuracy of the image of these parts is presented to the occupant of the vehicle to give a warning. However, if the masks M always superposed in a fixed display form, for example, when the occupant of the vehicle gets used to this display, there is a possibility that the masks M will lose visibility to cause a reduction in effectiveness of the warning.

Thus, the vehicle image display system of the present invention includes the mask control unit 13 disposed in the image processing device 2. This mask control unit 13 enables proper changing of the display form of the masks M superposed on the top view image. Especially, the mask control unit 13 controls the display form of the masks M so that the masks M of the top view image can be highlighted only until a passage of predetermined time after predetermined conditions are established. The predetermined conditions are conditions for specifying situations which need warning by the masks M to the occupant of the vehicle, for example, a case in which after the ignition switch 4 is turned ON, the top view image is first displayed in the display 3 according to an operation of the camera switch 5. As conditions, in addition to the case in which the top view image is first displayed after the ignition switch is turned ON, various conditions can be set according to experience or market demands. The predetermined time is set to sufficiently direct attention of the occupant of the vehicle to the masks M of the top view image, for example, 7 seconds.

An example of highlighting of the masks M is changing of a display color of the masks M. In other words, the masks M are displayed by a conspicuous color such as yellow to give a warning only until a passage of predetermined time after predetermined conditions are established, and then displayed by a relatively inconspicuous color such as black. Even in the case of the same color, it is effective to highlight the masks M by displaying the masks M by a first luminance only until the passage of predetermined time after the predetermined conditions are established, and then to display the masks M by a second luminance lower than the first luminance. Even in the case of the same color, it is effective to highlight the masks M by flashing the masks M only until the passage of predetermined time after the predetermined conditions are established, and then to continue displaying of the masks M. Further, if the masks M are flashed by a conspicuous color such as yellow to be displayed until the passage of predetermined time after the predetermined conditions are established, and then the masks M are continuously displayed by a relatively inconspicuous color such as black, effectiveness of warning can be enhanced more.

The control of the highlighting of the masks M by the mask control unit 13 may be executed by using setting in which control of the highlighting is valid as a condition according to a switch operation of the occupant of the vehicle. Accordingly, the occupant of the vehicle can select whether to execute highlighting control of the masks M, solving a problem that the occupant of the vehicle feels irritated because of execution of unnecessary control.

In the highlighting control of the masks M, the masks M are changed from a highlighted state to a normal display state after the passage of predetermined time after the predetermined conditions are established. This display change of the masks M is preferably executed slowly, taking predetermined time, for example, 2 seconds. Thus, uncomfortable feelings caused by an extreme change of the display form of the masks M can be reduced.

As described above, the mask control unit 13 basically controls the highlighting of the masks M to prevent a reduction in effectiveness of warning to the occupant of the vehicle.. Additionally, a display form in which a display color or a luminance of the masks M is changed according to an environmental change such as brightness in the car room can be controlled. Specifically, for example, control may be executed in such a manner that the masks M are displayed black in the daytime, and displayed white or flashed black and white at night by using an ON/OFF signal of the vehicle lighting or a signal from an automatic light sensor. Accordingly, by executing control to optimally change the display form of the masks M according to an environmental change, it is possible to effectively curtail a reduction in visibility of the masks M of the top view image.

According to various signals input from a car speed sensor 6, a reverse position switch 7, an image changing switch 8, and a side blind switch 9, the image selection unit 14 selects an image to be displayed as an image to be monitored in the display 3 among the front view image photographed by the on-vehicle camera 1a, the left side view image photographed by the on-vehicle camera 1b, the rear view image photographed by the on-vehicle camera 1c, the right side view image photographed by the on-vehicle camera 1d, and the top view image formed by the image synthesis unit 11 and having the masks M superposed thereon by the mask superposition unit 12.

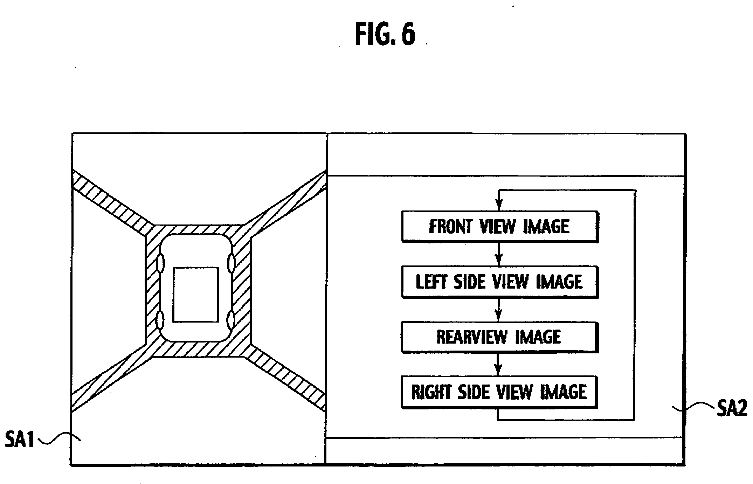

Fig. 6 shows a screen configuration example of an image displayed in the display 3 to be monitored. In the example of Fig. 6, for the image displayed in the display 3 to be monitored, an entire screen is divided into two left and right sides. A top view image can be displayed in a display area SA1 of the screen left side, and any one of a front view image, a left side view image, a rear view image, and a right side view image can be displayed in a display area SA2 of the screen right side.

In the case of the screen configuration example of the image to be monitored shown in Fig. 6, upon recognition that the image to be monitored is displayed in the display 3 by an operation of the camera switch 5, the image selection unit 14 first selects a top view image having masks M superposed thereon as an image to be displayed in the display area SA1 of the screen left side, and a front view image as an image to be displayed in the display area SA2 of the screen right side. Then, when the occupant of the vehicle operates the screen changing switch 8, the image selection unit 14 switches images to be displayed in the display area SA2 of the screen right side in an order of a front view image→right side view image→rear view image→left side view image→the front view image .... Upon reception of a reverse signal indicating setting of a shift position to reverse from the reverse position switch 7, the image selection unit 14 switches the image to be displayed in the display area SA2 of the screen right side to the rear view image irrespective of the aforementioned switching order.

When the occupant of the vehicle operates the side blind switch 9, the image selection unit 14 switches the image to be displayed in the display area SA1 of the screen left side from the top view image to the right side view image. Then, when the side blind switch 9 is operated again, the image to be displayed in the display area SA1 of the screen left side is switched from the right side view image to the top view image. The displaying of the image to be monitored is carried out under the condition that a traveling speed of the vehicle is less than a predetermined value. When the traveling speed of the vehicle is determined to be equal to or more than the predetermined value based on a signal from the car speed sensor 6, the image to be displayed in the display 3 is switched from the image to be monitored to an original image, i.e., a navigation image or a television image displayed in the display 3 before the camera switch 5 is operated to start displaying of the image to be monitored.

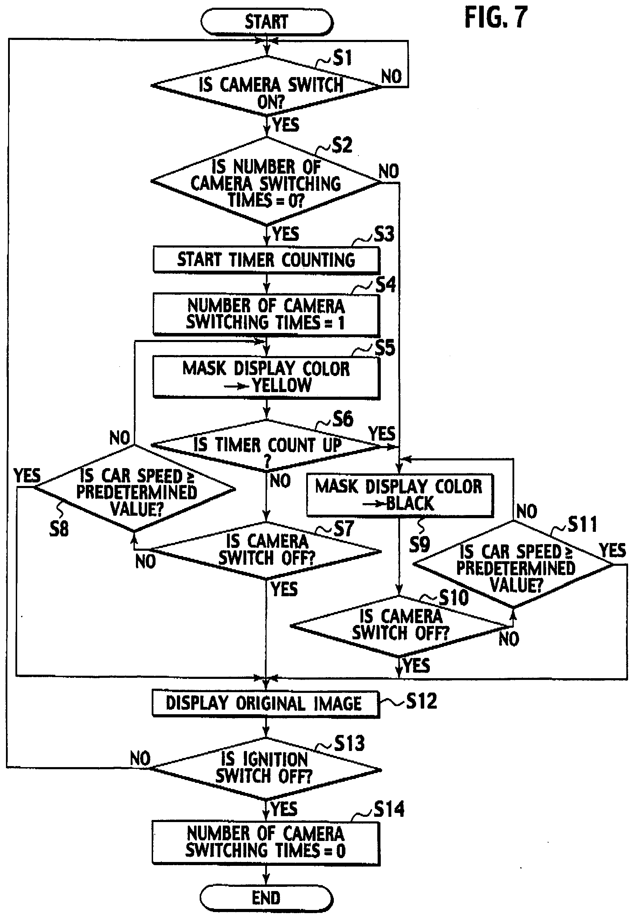

Next, referring to a flowchart of Fig. 7, an operation of the vehicle image display system of the embodiment configured in the aforementioned manner will be described focusing on the display control of the masks M which is a feature of the present invention. The flowchart of Fig. 7 shows a specific example of a process of the display control of the masks M executed by the image processing device 2 after the vehicle ignition switch 4 is turned ON in the vehicle image display system of the embodiment. According to this example, it is presumed that a top view image is displayed for the first time after the ignition switch 4 is turned ON, masks M of a top view image are highlighted as a condition, and a highlighting method displays the masks M by yellow. In the image processing device 2, a process of fetching a front view image, a left side view image, a rear view image, and a right side view image photographed by the on-vehicle cameras 1a to 1d to save the images, and forming a top view image from these images is executed in parallel with the process shown in Fig. 7.

Upon turning-ON of the vehicle ignition switch 4, the image processing device 2 first monitors an ON-operation of the camera switch 5 in step S1. When the occupant of the vehicle turns the camera switch 5 ON to input an ON-signal therefrom, the image processing device 2 checks whether the number of camera switching times is 0 in step S2. The number of camera switching times indicates the number of turning ON the camera switch 5 while the ignition switch 4 is ON. An initial value is 0, and incremented each time the camera switch 5 is turned ON. Accordingly, when the camera switch 5 is turned ON for the first time after the ignition switch 4 is turned ON, the number of camera switching times is 0.

The image processing device 2 displays an image to be displayed which contains the top view image in the display 3 according to the ON-operation of the camera switch 5. In this case, if a result of the determination in the step S2 shows the number of camera switching times = 0, in next step S3, timer counting for counting predetermined time (e.g., 7 seconds) is started. In step S4, the number of camera switching times is incremented to 1. Then, in step S5, yellow is selected as a display color of the masks M of the top view image, and the top view image having the yellow masks M superposed thereon to cover joints of the images is displayed as an image to be monitored in the display 3.

The highlight-displaying of the top view image by using yellow as the display color of the masks M is continued until the timer counting started in the step S3 is counted up as long as the camera switch 5 is ON and the vehicle traveling speed is less than the predetermined value. Upon determination of counting-up of the timer counting in step S6, the process proceeds to step 9 to switch the display color of the masks M of the top view image from yellow to black.

If an OFF-operation of the camera switch 5 is detected before the timer counting started in the step S3 is counted up in step S7, the process proceeds to step S12 to switch the image displayed in the display 3 from the image to be monitored to an original image such as a navigation image or a television image. If the vehicle traveling speed is determined to be equal to or more than the predetermined value based on a signal from the car speed sensor 6 before the timer counting started in the step S3 is counted up in step S8, the process proceeds to the step S12 to switch the image displayed in the display 3 from the image to be monitored to the original image.

When ON and OFF operations of the camera switch 5 is repeated by a plurality of times while the ignition switch 4 is ON, the image processing device 2 displays the image to be monitored which contains the top view image in the display 3 each time the camera switch 5 is turned ON. In this case, as the number of camera switching times is a value other than 0, the determination result of the step S2 is NO. In this case, in step S9, the image processing device 2 selects black as a display color of the masks M of the top view image, and displays the top view image having the black masks M superposed thereon to cover the joints of the images as an image to be monitored in the display 3. The displaying of the image to be monitored is continued as long as the camera switch 5 is ON and the vehicle traveling speed is less than the predetermined value. If an OFF-operation of the camera switch 5 is detected in step S10, or if the vehicle traveling speed is determined to be equal to or more than the predetermined value based on a signal from the car speed sensor 6 in step S11, the process proceeds to the step S12 to switch the image displayed in the display 3 from the image to be monitored to the original image.

Subsequently, in step S13, the image processing device 2 monitors switching of the vehicle ignition switch 4 from ON to OFF. The process of the step S1 and after is repeated if the ignition switch 4 is ON. Upon switching of the ignition switch 4 to OFF, in step S14, the number of camera switching times is reset to 0, and the series of operations is finished.

As described above by taking the specific examples, according to the vehicle image display system of the embodiment, when the image processing device 2 subjects the images photographed by the on-vehicle cameras 1a to 1d to viewpoint changing, and joints the images to form a top view image, and superposes the masks M on the joints of the top view image to display the image as the monitor displayed in the display 3 to be monitored, for example, the masks M of the top view image are highlighted until the passage of predetermined time after the predetermined conditions such as first top view image displaying time after the ignition switch is turned ON are established. Thus, the masks M can be made conspicuous especially in a situation in which a warning should be given to the occupant of the vehicle by the masks M, and the easily seen top view image can be displayed as an image to monitored in the display 3 while preventing a reduction in effectiveness of the warning by the masks M.

Although the invention has been described above by reference to certain embodiments of the invention, the invention is not limited to the embodiments described above. Modifications and variations of the embodiments described above will occur to those skilled in the art, in light of the scope of the invention as defined with reference to the following claims.

## Claims

1. A vehicle (V) comprising:
an image display system;
an ignition switch (4); and
a camera switch (5);
the image display system comprising:
four on-vehicle cameras (1a to 1d) configured to photograph a plurality of images of four directions of surroundings of the vehicle;
an image synthesis unit (11) configured to join the plurality of images photographed by the plurality of on-vehicle cameras (1a to 1d) to form a composite image;
a mask superposition unit (12) configured to superpose masks on the composite image to cover joints of the plurality of images;
a display unit (3) configured to display the composite image having the masks superposed thereon; and
a mask control unit (13) configured to detect a predetermined condition, to determine a passage of predetermined time after the predetermined condition is detected, to perform a first display operation of the masks of the composite image only until the passage of predetermined time after the predetermined condition is established, and to perform a second display operation of the masks of the composite image different from the first display operation after the predetermined time,
wherein the mask control unit (13) is connected to the ignition switch (4) and to the camera switch (5) of the vehicle (V) and is configured to detect whether the ignition switch (4) is turned ON and to detect whether the camera switch (5) is turned ON,
the first display operation is a highlight operation such that the mask displayed by the first display operation is more conspicuous than the mask displayed by the second display operation, and
the predetermined condition is that the camera switch (5) is turned ON for the first time after the ignition switch (4) is turned ON.

2. The vehicle (V) according to claim 1, wherein the mask control unit (13) highlights the masks by flashing the masks of the composite image in the first display operation, and continues the displaying of the masks in the second display operation.

3. The vehicle (V) according to claims 1 or 2, wherein the mask control unit (13) highlights the masks by displaying the masks of the composite image by a first display color in the first display operation, and displays the masks by a second display color in the second display operation.

4. The vehicle (V) according to claim 1, wherein the mask control unit (13) highlights the masks by continuously displaying the masks of the composite image by a first display color in the first display operation, and continues the displaying of the masks by a second display color in the second display operation.

5. The vehicle (V) according to claims 3 or 4, wherein the first display color is yellow, and the second display color is black.

6. The vehicle (V) according to any one of claims 1 to 5, wherein the mask control unit (13) highlights the masks by displaying the masks of the composite image by a first luminance in the first display operation, and displays the masks by a second luminance in the second display operation.

7. An image display method for displaying an image around a vehicle (V) having an ignition switch (4), a camera switch (5) and an image display system comprising four on-vehicle cameras (1a to 1d) and a display unit (3), the method comprising the steps of:
photographing a plurality of images of four directions of surroundings of a vehicle (V) by four on-vehicle cameras (1a to 1d);
joining the plurality of images around the vehicle (V) photographed by the plurality of on-vehicle cameras (1a to 1d) to form a composite image;
superposing masks on the composite image to cover joints of the plurality of images;
displaying the composite image in a display unit (3);
detecting a predetermined condition;
detecting whether the ignition switch (4) is turned ON;
detecting whether the camera switch (5) is turned ON;
carrying out first mask display control performing a first display operation of the masks of the composite image only until the passage of predetermined time after the predetermined condition is established; and
carrying out second mask display control for performing a second display operation of the masks of the composite image different from the first display operation after the predetermined time,
wherein the first display operation is a highlight operation such that the mask displayed by the first display operation is more conspicuous than the mask displayed by the second display operation, and
the predetermined condition is that the camera switch (5) is turned ON for the first time after the ignition switch (4) of the vehicle (V) is turned ON.

## Patentansprüche

1. Fahrzeug (V), umfassend:
ein Bildanzeigesystem;
einen Zündschalter (4); und
einen Kameraschalter (5);
wobei das Bildanzeigesystem umfasst:
vier fahrzeugseitige Kameras (1a bis 1d), die dazu eingerichtet sind, mehrere Bilder von vier Umgebungsrichtungen des Fahrzeugs zu fotografieren;
eine Bildsyntheseeinheit (11), die dazu eingerichtet ist, die Vielzahl von Bildern, die von der Vielzahl von fahrzeugseitigen Kameras (1a bis 1d) fotografiert werden, zu verbinden, um ein zusammengesetztes Bild zu bilden;
eine Maskenüberlagerungseinheit (12), die dazu eingerichtet ist, die Masken auf dem zusammengesetzten Bild zu überlagern, um Verbindungen der Vielzahl von Bildern abzudecken;
eine Anzeigeeinheit (3), die dazu eingerichtet ist, das zusammengesetzte Bild anzuzeigen, auf dem die Masken überlagert sind; und
eine Maskensteuereinheit (13), die dazu eingerichtet ist, eine vorbestimmte Bedingung zu erfassen, um ein Verstreichen einer vorbestimmten Zeit zu bestimmen, nachdem der vorbestimmte Zustand erfasst wurde, um einen ersten Anzeigevorgang der Masken des zusammengesetzten Bildes nur bis zum Verstreichen einer vorbestimmten Zeit nach dem der vorbestimmte Zustand eingerichtet wurde, auszuführen und einen zweiten Anzeigevorgang der Masken des zusammengesetzten Bildes auszuführen, der sich von dem ersten Anzeigevorgang nach der vorbestimmten Zeit unterscheidet,
wobei die Maskensteuereinheit (13) mit dem Zündschalter (4) und dem Kameraschalter (5) des Fahrzeugs (V) verbunden und dazu eingerichtet ist zu erfassen, ob der Zündschalter (4) eingeschaltet ist, und zu erfassen, ob der Kameraschalter (5) eingeschaltet ist,
der erste Anzeigevorgang ein Hervorhebungsvorgang ist, so dass die Maske, die durch den ersten Anzeigevorgang angezeigt wird, auffälliger ist als die Maske, die durch den zweiten Anzeigevorgang angezeigt wird, und
die vorbestimmte Bedingung darin besteht, dass der Kameraschalter (5) zum ersten Mal eingeschaltet wird, nachdem der Zündschalter (4) eingeschaltet wurde.

2. Fahrzeug (V) nach Anspruch 1, bei dem die Maskensteuereinheit (13) die Masken durch Blinken der Masken des zusammengesetzten Bildes in dem ersten Anzeigevorgang hervorhebt und die Anzeige der Masken in dem zweiten Anzeigevorgang fortsetzt.

3. Fahrzeug (V) nach Anspruch 1 oder 2, bei dem die Maskensteuereinheit (13) die Masken durch Anzeigen der Masken des zusammengesetzten Bildes durch eine erste Anzeigefarbe in dem ersten Anzeigevorgang hervorhebt und die Masken durch eine zweite Anzeigefarbe in dem zweiten Anzeigevorgang hervorhebt.

4. Fahrzeug (V) nach Anspruch 1, bei dem die Maskensteuereinheit (13) die Masken durch kontinuierliches Anzeigen der Masken des zusammengesetzten Bildes durch eine erste Anzeigefarbe bei dem ersten Anzeigevorgang hervorhebt, und damit fortfährt, die Masken durch eine zweite Anzeigefarbe in dem zweiten Anzeigevorgang anzuzeigen.

5. Fahrzeug (V) nach Anspruch 3 oder 4, bei dem die erste Anzeigefarbe Gelb ist und die zweite Anzeigefarbe Schwarz ist.

6. Fahrzeug (V) nach einem der Ansprüche 1 bis 5, bei dem die Maskensteuereinheit (13) die Masken durch Anzeigen der Masken des zusammengesetzten Bildes durch eine erste Luminanz in dem ersten Anzeigevorgang hervorhebt und die Masken durch eine zweite Luminanz in dem zweiten Anzeigevorgang hervorhebt.

7. Bildanzeigeverfahren zum Anzeigen eines Bildes um ein Fahrzeug (V) herum, das einen Zündschalter (4), einen Kameraschalter (5) und ein Bildanzeigesystem hat, das vier fahrzeugseitige Kameras (1a bis 1d) und eine Anzeigeeinheit (3) hat, wobei das Verfahren die folgenden Schritte umfasst:
Fotografieren einer Vielzahl von Bildern aus vier Umgebungsrichtungen eines Fahrzeugs (V) durch vier fahrzeugseitige Kameras (1a bis 1d);
Verbinden der Vielzahl von Bildern um das Fahrzeug (V) herum, die von der Vielzahl von fahrzeugseitigen Kameras (1a bis 1d) fotografiert werden, um ein zusammengesetztes Bild zu erzeugen;
Überlagern von Masken auf dem zusammengesetzten Bild, um Verbindungen der Vielzahl von Bildern abzudecken;
Anzeigen des zusammengesetzten Bildes auf einer Anzeigeeinheit (3);
Erfassen einer vorbestimmten Bedingung;
Erfassen, ob der Zündschalter (4) eingeschaltet ist;
Erfassen, ob der Kameraschalter (5) eingeschaltet ist;
Ausführen einer ersten Maskenanzeigesteuerung, die einen ersten Anzeigevorgang der Masken des zusammengesetzten Bildes nur bis zum Ablauf einer vorbestimmten Zeit ausführt, nachdem die vorbestimmte Bedingung eingerichtet wurde; und
Ausführen einer zweiten Maskenanzeigesteuerung zum Ausführen eines zweiten Anzeigevorgangs der Masken des zusammengesetzten Bildes, die sich von dem ersten Anzeigevorgang nach der vorbestimmten Zeit unterscheidet,
wobei der erste Anzeigevorgang ein Hervorhebungsvorgang ist, so dass die Maske, die durch den ersten Anzeigevorgang angezeigt wird, auffälliger ist als die Maske, die durch den zweiten Anzeigevorgang angezeigt wird, und
die vorbestimmte Bedingung darin besteht, dass der Kameraschalter (5) zum ersten Mal eingeschaltet wird, nachdem der Zündschalter (4) des Fahrzeugs (V) eingeschaltet wurde.

## Revendications

1. Véhicule (V) comprenant:
un système d'affichage d'images:
un interrupteur d'allumage (4); et
un interrupteur de caméra (5);
le système d'affichage d'images comprenant:
quatre caméras embarquées sur le véhicule (1a à 1d) configurées pour photographier une pluralité d'images de quatre directions des environs du véhicule;
une unité de synthèse d'images (11) configurée pour combiner la pluralité d'images photographiées par la pluralité de caméras embarquées sur le véhicule (1a à 1d) et ainsi former une image composite;
une unité de superposition de masques (12) configurée pour superposer des masques sur l'image composite et ainsi recouvrir les joints de la pluralité d'images;
une unité d'affichage (3) configurée pour afficher l'image composite sur laquelle sont superposés les masques; et
une unité de commande de masques (13) configurée pour détecter une condition prédéterminée, afin de déterminer un laps de temps prédéterminé une fois que la condition prédéterminée est détectée, pour effectuer une première opération d'affichage des masques de l'image composite seulement jusqu'au terme du laps de temps prédéterminé après établissement de la condition prédéterminée, et pour effectuer une seconde opération d'affichage des masques de l'image composite différente de la première opération d'affichage après le laps de temps prédéterminé,
dans lequel l'unité de commande de masques (13) est connectée à l'interrupteur d'allumage (4) et à l'interrupteur de l'appareil (5) du véhicule (V) et est configurée pour détecter si l'interrupteur d'allumage (4) est mis sous tension et pour détecter si l'interrupteur de caméra (5) est mis sous tension,
la première opération d'affichage est une opération de mise en surbrillance de telle sorte que le masque affiché par la première opération d'affichage est plus visible que le masque affiché par la seconde opération d'affichage, et
la condition prédéterminée est que l'interrupteur de la caméra (5) est mis sous tension pour la première fois après la mise sous tension de l'interrupteur d'allumage (4).

2. Véhicule (V) selon la revendication 1, dans lequel l'unité de commande de masques (13) met en surbrillance les masques en faisant clignoter les masques de l'image composite dans la première opération d'affichage, et continue l'affichage des masques dans la seconde opération d'affichage.

3. Véhicule (V) selon les revendications 1 ou 2, dans lequel l'unité de commande de masques (13) met en surbrillance les masques de l'image composite avec une première couleur d'affichage lors de la première opération d'affichage, et affiche les masques avec une seconde couleur d'affichage lors de la seconde opération d'affichage.

4. Véhicule (V) selon la revendication 1, dans lequel l'unité de commande de masques (13) met en surbrillance les masques en affichant de manière continue les masques de l'image composite avec une première couleur d'affichage lors de la première opération d'affichage, et continue l'affichage des masques avec une seconde couleur d'affichage lors de la seconde opération d'affichage.

5. Véhicule (V) selon les revendications 3 ou 4, dans lequel la première couleur d'affichage est le jaune et la seconde couleur d'affichage est le noir.

6. Véhicule (V) selon l'une quelconque des revendications 1 à 5, dans lequel l'unité de commande de masques (13) met en surbrillance les masques en affichant les masques de l'image composite avec une première luminance lors de la première opération d'affichage, et affiche les masques avec une seconde luminance lors de la seconde opération d'affichage.

7. Procédé d'affichage d'images pour afficher une image autour d'un véhicule (V) comportant un interrupteur d'allumage (4), un interrupteur de caméra (5) et un système d'affichage d'images comprenant quatre caméras embarquées sur le véhicule (1a à 1d) et une unité d'affichage (3), le procédé comprenant les étapes consistant à:
photographier une pluralité d'images de quatre directions des environs du véhicule (V) par quatre caméras embarquées sur le véhicule (1a à 1d);
combiner la pluralité d'images autour du véhicule (V) photographiées par la pluralité de caméras embarquées sur le véhicule (1a à 1d) pour former une image composite;
superposer les masques sur l'image composite et ainsi recouvrir les joints de la pluralité d'images;
afficher image composite dans une unité d'affichage (3);
détecter une condition prédéterminée;
détecter si l'interrupteur d'allumage (4) est sous tension;
détecter si l'interrupteur de caméra (5) est sous tension;
effectuer une première commande d'affichage de masques en réalisant une première opération d'affichage des masques de l'image composite seulement jusqu'au terme du laps de temps prédéterminé après établissement de la condition prédéterminée; et
effectuer une seconde commande d'affichage de masques pour réaliser une seconde opération d'affichage des masques de l'image composite différente de la première opération d'affichage après le laps de temps prédéterminé,
dans lequel la première opération d'affichage est une opération de mise en surbrillance de telle sorte que le masque affiché par la première opération d'affichage est plus visible que le masque affiché par la seconde opération d'affichage, et
la condition prédéterminée est que l'interrupteur de la caméra (5) est mis sous tension pour la première fois après la mise sous tension de l'interrupteur d'allumage (4) du véhicule (V).
